# EUROPEAN PATENT SPECIFICATION

(11) **EP 3 091 452 B1**
(45) Date of publication and mention of the grant of the patent: **02.01.2019**
(21) Application number: 16158343.0
(22) Date of filing: 02.03.2016
(51) Int. Cl.: G06F 17/30, G06F 21/60, H04L 29/06

(54) **SYSTEMS AND METHODS FOR OPTIMIZED IMPLEMENTATION OF A DATA WAREHOUSE ON A CLOUD NETWORK**
SYSTEM UND VERFAHREN ZUR OPTIMIERTEN IMPLEMENTIERUNG EINES DATEN-WAREHOUSE AUF EINEM CLOUD-NETZWERK
SYSTÈMES ET PROCÉDÉS POUR OPTIMISER LA MISE EN OEUVRE D'UN ENTREPÔT DE DONNÉES SUR UN RÉSEAU DE CLOUD

(30) Priority: 08.05.2015 IN 2357CH2015
(43) Date of publication of application: 09.11.2016
(73) Proprietor: Wipro Limited, 560 035 Karnataka (IN)
(72) Inventor: NELLAMAKKADA, Kariappa Thimmaiah, 76 Bangalore (IN)
(74) Representative: Finnegan Europe LLP

(56) References cited:
- WO-A1-2015/016813
- WO-A2-2004/034216
- US-A1- 2010 211 539
- US-A1- 2013 047 161
- US-A1- 2014 173 272
- US-A1- 2015 293 980
- James Serra: "Difference between ETL and ELT", , 4 January 2012 (2012-01-04), XP055432234, Retrieved from the Internet: URL:http://www.jamesserra.com/archive/2012 /01/difference-between-etl-and-elt/ [retrieved on 2017-12-05]

## Description

### Technical Field

This disclosure relates generally to data warehouse systems and more particularly to systems and methods for optimized implementation of a data warehouse on a cloud network.

### Background

Typically, a data warehouse acts as a central repository for gathering and integrating data from one or more sources. These sources could be internal data sources and/or external data sources. The data warehouse arranges the data gathered in a meaningful format for making accurate and timely business decisions. That is why data warehouses based applications are widely used by executives, managers, and business analysts in making complex business decisions, such as an analysis of trends, target marketing, competitive analysis, and customer relationship management. In an example, the applications may be group of programs used for analyzing and creating reports for revenue calculation and profit/loss margins for a company across various domains, such as finance and banking where critical and confidential data is involved. Further, the applications are nowadays utilizing cloud-computing methodologies for delivering computing as a service rather than a product, whereby shared resources, software, and information are provided to computers and other devices as a utility over a network.

US 2010/0211539 A1 relates to a system and method for building data warehouses. The method includes receiving extract input parameters for extracting data from a source data file; building a communications channel to a selected source database management system containing the source data file in dependence upon the received extract input parameters; extracting data from the selected source data file and storing the extracted data into a staging table; receiving transform and load input parameters for transforming data stored in the staging table and loading the transformed data into a data warehouse table; and in dependence upon the selected source database management system and the received extract, transform, and load input parameters, selecting pre-built modules for building the data warehouse with the data warehouse tables loaded with the transformed data.

US 2014/0173272 A1 relates to a cloud storage system, a device and method for performing a data encryption processing in the cloud storage system. The cloud storage system includes cloud storage modules for storing and managing data and a data encryption processing device. The data encryption processing device manages priorities on encrypting data of the cloud storage modules using information on whether encryption processing for each of the cloud storage modules is supported. When a request for data encryption is received, a cloud storage module is selected on the basis of the priorities and performs encryption of the respective data.

US 2013/0047161 A1 discloses a method for data flow processing, such as Extract, Transform, and Load processing. The method includes determining values for each of a set of parameters associated with a task within a data flow processing job and applying a set of rules to determine a processing technique for executing the task.

### SUMMARY

In accordance with aspects of the invention there are provided a computer-implemented method for optimized implementation of a data warehouse on a cloud network, a cloud integrated data warehousing system for optimized implementation of a data warehouse on a cloud network, and a computer-readable medium as set out in claims 1, 9, and 10 respectively.

In one embodiment, a processor-implemented method for optimized implementation of a data warehouse on a cloud network is disclosed. The method comprises receiving, by a processor of a cloud integrated data warehousing (CIDW) system, data from at least one data source. The method further comprises processing the data to obtain structured data. The method further comprises encrypting the structured data stored in the CIDW system. The method further comprises decrypting load data, from amongst the structured data, to be loaded into a database. The method further comprises loading the load data into the database through one of an extract transform load (ETL) process and an extract load transform (ELT) process, wherein, to optimize transformation load share between an ETUELT slave server and a database slave server of the CIDW system, the ELT process is initiated when a transformation load is on the database slave server and the ETL process is initiated when the transformation load is on the ETUELT slave server acting as an ETL slave server. The method further comprises a reporting slave server of the CIDW system generating reports comprising encrypted load information for end users.

In another embodiment, there is provided a method for optimized implementation of a data warehouse on a cloud network, the method comprising: receiving, by a processor of a cloud integrated data warehousing (CIDW) system, data from at least one data source; processing, by the processor, the data to obtain structured data; encrypting, by the processor, the structured data stored in the CIDW system; decrypting, by the processor, load data, from amongst the structured data, to be loaded into a database; loading, by the processor, the load data into the database through one of an extract transform load (ETL) process and an extract load transform (ELT) process; and generating, by the processor, reports comprising encrypted load information for end users.

In another embodiment, a system for optimized implementation of a data warehouse on a cloud network is disclosed. The system includes at least one processors and a computer-readable medium. The computer-readable medium stores instructions that, when executed by the at least one processor, cause the at least one processor to perform operations comprising receiving data from at least one data source. The operations further comprise processing the data to obtain structured data. The operations further comprise encrypting the structured data stored in the CIDW system. The operations further comprise decrypting load data, from amongst the structured data, to be loaded into a database. The operations further comprise loading the load data into the database through one of an extract transform load (ETL) process and an extract load transform (ELT) process. The operations further comprise generating reports comprising encrypted load information for end users.

In another embodiment, there is provided a cloud integrated data warehousing (CIDW) system for optimized implementation of a data warehouse on a cloud network, comprising: one or more processors; a computer-readable medium storing instructions that, when executed by the one or more processors, cause the one or more processors to perform operations comprising: receiving data from at least one data source; processing the data to obtain structured data; encrypting the structured data stored in the data warehouse; decrypting load data, from amongst the structured data, to be loaded into a database; loading the load data into the database through one of an extract transform load (ETL) process and an extract load transform (ELT) process; and generating reports comprising encrypted load information for end users.

In yet another embodiment, a non-transitory computer-readable storage medium for optimized implementation of a data warehouse on a cloud network is disclosed, which when executed by a computing device, cause the computing device to perform operations comprising receiving data from at least one data source. The operations further comprise processing the data to obtain structured data. The operations further comprise encrypting the structured data stored in the CIDW system. The operations further comprise decrypting load data, from amongst the structured data, to be loaded into a database. The operations further comprise loading the load data into the database through one of an extract transform load (ETL) process and an extract load transform (ELT) process. The operations further comprise generating reports comprising encrypted load information for end users.

In another embodiment, there is provided a non-transitory computer-readable medium storing instructions for optimized implementation of a data warehouse on a cloud network, wherein upon execution of the instructions by one or more processors, the processors perform operations comprising: receiving data from at least one data source; processing the data to obtain structured data; encrypting the structured data stored in the CIDW system; decrypting load data, from amongst the structured data, to be loaded into a database; loading the load data into the database through one of an extract transform load (ETL) process and an extract load transform (ELT) process; and generating reports comprising encrypted load information for end users.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
Figure 1 illustrates an exemplary network environment for optimized implementation of a data warehouse on a cloud network, in accordance with some embodiments of the present disclosure.
Figure 2 illustrates an exemplary method for optimized implementation of a data warehouse on a cloud network, in accordance with some embodiments of the present disclosure.
Figure 3 is a block diagram of an exemplary computer system for implementing embodiments consistent with the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Nowadays cloud based data warehousing solutions are being used by executives, managers, and project leaders to take business decision and form strategies. The cloud based data warehousing solutions are not cost effective due to dependencies on various tools and databases for extract transform load (ETL), reporting and data storage. Further, when solutions are made at a cloud level to make cost effectiveness, security may be poor, especially for banking and insurance clients as they do not want their data to be hacked. Further, due to dependencies on various tool vendors, there are connectivity issues after passing through security limits at Client infrastructure. This may affect performance due to product limitations and compatibilities across various vendor products.

Modern Cloud services and Solutions have to pass through public network outside the Virtual Private Cloud (VPC). This causes security issues. Various ETL and extract load transform (ELT) tools do not have Client side encryption to be implemented on Cloud. Various tools for ETL/ELT or reporting and databases come with a huge cost and limitations. Various connectivity issues due to multi applications/tools would occur. Therefore, business users generally would opt for economical solutions which don't compromise with the security and performance.

The present subject matter discloses systems and methods for optimized implementation of a data warehouse on a cloud network. The systems and methods may be implemented in a variety of computing systems. The computing systems that can implement the described method(s) include, but are not limited to a server, a desktop personal computer, a notebook or a portable computer, and a mainframe computer. Although the description herein is with reference to certain computing systems, the systems and methods may be implemented in other computing systems, albeit with a few variations, as will be understood by a person skilled in the art.

In the present subject matter, a data warehouse is implemented on a cloud network with extract, load, transform, and reporting operations. In operations, a cloud integrated data warehousing (CIDW) system may receive data from at least one data source. In an example, the at least one data source may include structured data sources and unstructured data sources. The data may be then processed to obtain the data in a structured format. The data in the structured format may be referred to as structured data. Further, the structured data is encrypted and stored in the data warehouse. In case, any application wants to access the structured data, decryption of the structured data is performed before providing the structured data to the application. In an example, the data which is to be loaded into a database is decrypted and loaded through one of an extract transform load (ETL) process and an extract load transform (ELT) process. Further, reports are generated for providing loaded analytical information to end users.

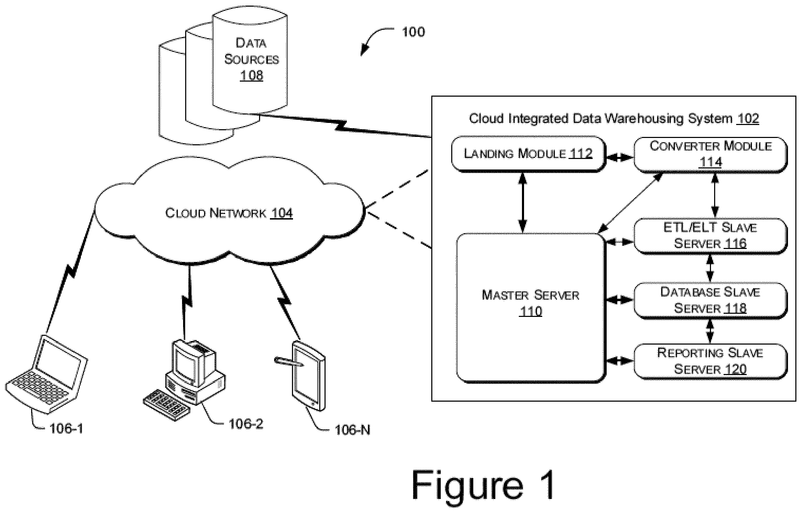

Working of the systems and methods for optimized implementation of a data warehouse on a cloud network is described in conjunction with Figures 1-3. It should be noted that the description and drawings merely illustrate the principles of the present subject matter. It will thus be appreciated that those skilled in the art will be able to devise various arrangements that, although not explicitly described or shown herein, embody the principles of the present subject matter and are included within its scope. Furthermore, all examples recited herein are principally intended expressly to be only for pedagogical purposes to aid the reader in understanding the principles of the present subject matter and are to be construed as being without limitation to such specifically recited examples and conditions. Moreover, all statements herein reciting principles, aspects, and embodiments of the present subject matter, as well as specific examples thereof, are intended to encompass equivalents thereof. While aspects of the systems and methods can be implemented in any number of different computing systems environments, and/or configurations, the embodiments are described in the context of the following exemplary system architecture(s).

Figure 1 illustrates an exemplary network environment 100 for optimized implementation of a data warehouse 102 on a cloud network 104, in accordance with some embodiments of the present disclosure. Hereinafter, the data warehouse 102 may be interchangeably referred to as a cloud integrated data warehousing (CIDW) system 102.

The CIDW system 102 is integrated with the cloud network 104. In an example, the cloud network 104 may comprise, a variety of computing devices, a collection of hardware, software, services, and/or resources that can be invoked to instantiate a virtual machine, process, or other resource for a limited or defined duration. The CIDW system 102 may be implemented on one of the computing systems part of the cloud network 104. The computing systems may include a laptop computer, a desktop computer, a notebook, a workstation, a mainframe computer, a server, a network server, and the like.

The cloud network 104 may be a wireless network, wired network or a combination thereof. The cloud network 104 can be implemented as one of the different types of networks, such as intranet, local area network (LAN), wide area network (WAN), the internet, and such. The cloud network 104 may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network 106 may include a variety of network devices, including routers, bridges, servers, computing devices, storage devices, etc.

As shown in Figure 1, a plurality of user devices 106-1, 106-2, 106-3, 106-N are communicatively coupled to the CIDW system 102 through the cloud network 104 for facilitating one or more end users to access and/or operate the CIDW system 102. It may be understood that the CIDW system 102 may be accessed by users through the plurality of user devices 106-1, 106-2, 106-3, 106-N, collectively referred to as user devices 106 and individually referred to as user device 106. Examples of the user devices 106 include, but are not limited to, a desktop computer, a portable computer, a mobile phone, a handheld device, and a workstation. The user devices 106 may be used by various stakeholders or end users of the organization, such as project managers, database administrator, developers, and project leaders to access the CIDW system 102.

As shown in Figure 1, data sources 108 are communicatively coupled to the CIDW system 102. By having direct communication link with the data sources 108, the CIDW system 102 ensures that data security is maintained. This may be helpful when the CIDW system 102 is dealing with confidential data as organization may not want their data to pass through the cloud network .It may be noted that when the data is to be transferred, first it is encrypted and then provided to an entity requesting the data so that data security is maintained. Further, it may be understood that the CIDW system 102 may communicate with the data sources 108 through the cloud network 104 where data security is not an issue. In an example, the data sources 108 may be external and/or internal data sources. Further, the data sources 108 may be structured data sources and unstructured data sources. Examples of structured data sources may include flat files and relational tables where data is in consistent format. Examples of unstructured data sources may include social-media platforms and multimedia platforms where data is not consistent and comprises data in various formats, such as images, videos, audio, and text.

Further, the CIDW system 102 comprises a master server 110, a landing module 112, a converter module 114, an extract transform load/ extract load transform (ETL/ELT) slave server 116, a database slave server 118, and a reporting slave server 120.

The master server 110 is main component of the CIDW system 102. The master controls other components of the CIDW system 102, such as the landing module 112, the converter module 114, the ETUELT slave server 116, the database slave server 118, and the reporting slave server 120. The master server 110 has capability to optimize transformation load share between ETUELT slave server 116 and the database slave server 118. In an example, the master server 110 may initiate ELT process when the transformation load is on the database slave server 118. In another example, the master server 110 may initiate ETL process when the transformation load is on the ETL slave server 116. Further, the master server 110 may determine whether aggregation rules should happen at the database slave server 118 or reporting slave server 120. In case, the ELT process is used, then database slave server 118 may not be used for aggregation as the database slave server 118 may get overloaded.

In operations, the master server 110 may instruct the landing module 112 to receive data from the data sources 108. Thereafter, the landing module 112 may receive the data, from the data sources 108, comprising unstructured data and structured data. Once the data is received, the master server 110 may encrypt the data received and store in the landing module 112. Whenever extraction of the data from the landing module 112 is needed by an application/database, the master server 110 sends instructions for decrypting the data and provides the decrypted data to the application/database. It may be noted that the data at rest may be encrypted by the master server 110 using encryption keys and all data at motion may encrypted by the master server 110 through secured transfers like Hypertext Transfer Protocol (HTTP) etc. The landing module 112 may also be used as a storage unit for storing files comprising the structured data and the unstructured data. In an example, the landing module 112 may be a staging database in case of relational sources and other table related sources.

Further, since the data is obtained from different types of data sources 108, such as the structured data sources and unstructured data sources, the converter module 114 may process the unstructured data to convert it into a structured format before providing it to ELT process or ETL process.

The ETL/ELT slave server 116 listens to the master server 110 to determine whether to act as an ELT slave server 116 or ETL slave server 116. While acting as the ELT slave server 116, transformation load is not taken by the ELT slave server 116, but instead transformation load is given to the database slave server 118. The transformation load may be understood as load taken by the database slave server 118 to transform source data into meaningful data based on business rules, formulas, expressions etc. In case of acting as an ETL slave server 116, the transformation load is taken by ETL slave server 116 and not by the database slave server 118. It may be noted that the data when extracted by the ETL/ELT slave server 116 is in a decrypted format.

The database slave server 118 listens to the master server 110. The server takes load of transformation when the ETUELT slave server 116 is acting as an ELT server 116. Further, the database slave server 118 may take load of aggregation upon identifying that the aggregation is not performed by the reporting slave server 120.

Once the ETL/ELT operations are done, the reporting slave server 120 may listen to the master server 110 for performing the aggregation. It may be noted that aggregation is performed to improve the query and reporting performance at the reporting slave server 120. Further, aggregated tables at the database level may reduce load to the reporting slave server 120 to refresh the data which in turn may help in generating the reports quickly for the end user. In an example, even though the aggregated tables are used, separate detailed tables may be maintained to reaching granularity at reporting level. However it is recommended to have aggregation to be made at database level. The reporting slave server 120 may help in faster fetch of report refreshment for the end users. The reporting slave server 120 may provide options to the end users to make in-memory for reporting data, which may help in faster data retrieval. In an example, the reporting slave server 120 provides the reports to the end users in an encrypted format. The reports may comprise load information, comprising analytical, transactional, real time and historical data, for the end users to enable them to take business and strategic decisions. The reporting slave server 120 may provide an encryption key generated by the master server 110 to authorized end users so that only authorized end users can decrypt the reports and access the load information.

Thus, the present subject matter discloses the data warehouse, implemented on the cloud network 104, which can extract load and transform data, store data in the database/data warehouse, do reporting, give proper security and connectivity on the cloud network 104 as a single integrated unit. Since the CIDW system 102 provides operations of extract, transform, load, and reporting as a single unit, dependency on various tools is removed, which in turn eliminates connectivity issues, if any. The data, at rest, in the CIDW system 102 always remain in an encrypted format which helps in addressing security concerns raised by the end users.

Further, it may be noted that the CIDW system 102 disclosed by the present subject matter is cloud independent and can fit into any cloud service provider. Further, the CIDW system 102 can read/ capture data from the structured data sources and the unstructured data sources.

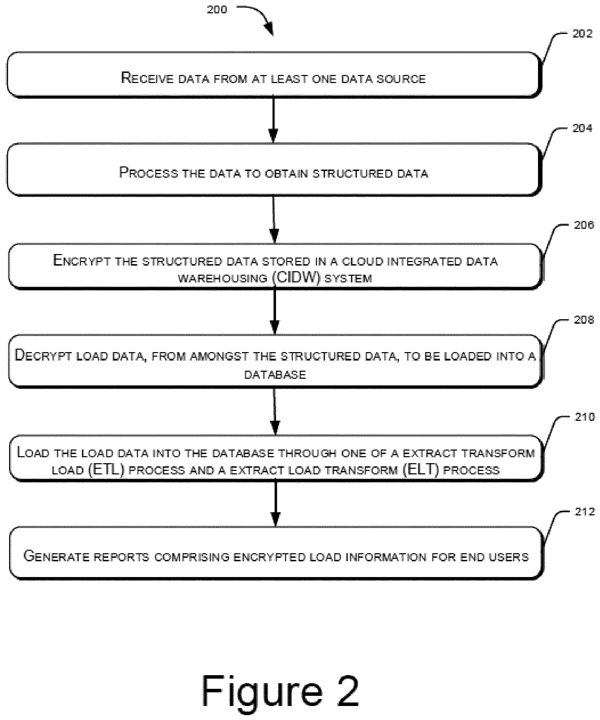

Figure 2 illustrates an exemplary method for optimized implementation of the data warehouse on the cloud network 104, in accordance with some embodiments of the present disclosure.

The method 200 may be described in the general context of computer executable instructions. Generally, computer executable instructions can include routines, programs, objects, components, data structures, procedures, modules, and functions, which perform particular functions or implement particular abstract data types. The method 200 may also be practiced in a distributed computing environment where functions are performed by remote processing devices that are linked through a communication network. In a distributed computing environment, computer executable instructions may be located in both local and remote computer storage media, including memory storage devices.

The order in which the method 200 is described is not intended to be construed as a limitation, and any number of the described method blocks can be combined in any order to implement the method 200 or alternative methods. Additionally, individual blocks may be deleted from the method 200 without departing from the scope of the subject matter described herein. Furthermore, the method 200 can be implemented in any suitable hardware, software, firmware, or combination thereof.

The CIDW system 102 disclosed in the present subject matter is integrated on the cloud network 104 to perform operations, such as extract, load, transform, and reporting. With reference to Figure 2, at block 202, data is received from at least one data source. The at least one data source may include structured data sources and unstructured data sources. In an example, the landing module 112 may receive instructions from the master server 110 for receiving the data from the data sources 108. Upon receiving the instructions from the master server 110, the landing module 112 may read the data and store in it. For storing the data, the landing module 112 may act as a repository. Further, the master server 110 may encrypt the data before storing in the landing module 112.

At block 204, the data received by the landing module 112 is processes to obtain structured data. Since the data is received from the data sources 108, such as the structured data sources and the unstructured data sources, the converter module 114 may convert unstructured data received in a structured format so that the data is consistent in the landing module 112. In this manner, the structured data is obtained. It may be noted that, the data may reside in the landing module 112 in an unstructured format also and is converted into the structured data by the converter module 114 when needed by the ELT/ETL slave server 116 for loading. The converted module receives instruction for conversion of the data from the master server 110.

At block 206, the structured data stored in the data warehouse is encrypted. In an example, the master server 110 may encrypt the data and store the data in encrypted format in the landing module 112. It may be noted that the data, in case of rest or when not needed/used by an application or database, remains in the landing module 112 in an encrypted format.

At block 208, load data which is to be loaded into a database is selected from amongst the structured data and unstructured data stored in the landing module 112 and decrypted. In other words, the term "load data" preferably refers to a predefined set of data identified for loading into the database. Further, the decrypted load data is provided to the database. In an example, the master server 110 decrypts the load data and provides it to the database through ETUELT processes.

At block 210, the load data is loaded into the database through one of an extract transform load (ETL) process and an extract load transform (ELT) process. In an example, the master server 110 may determine whether data transformation should happen as per an ETL process or an ELT process. In case of the ETL process, data transformation may be performed by the ETL slave server 116. In case of the ELT process, the data transformation may be performed by the database slave server 118.

It may be noted that the data at rest in the database is in an encrypted format and is decrypted during read operation initiated by an authorized users or the reporting slave server 120. Further, data aggregation may be performed at a database level, however the master server 110 may ensure that both aggregation and transformation load is not given simultaneously to the database slave server 118. Also, the master server 110 may ensure that both aggregation and non-aggregated tables should be maintained at the database level to improve reporting performance and also maintaining data granularity at a reporting level.

At block 212, reports comprising encrypted load information are generated for the end users. The term "load information" preferably refers to information describing a load status of the data warehouse. In other words, the load information may describe the quantity of load data within the database and/or a remaining capacity for load data within the database. The information may be provided in various forms, such as text comments or alphanumeric strings. In an example, the reporting slave server 120 may generate the reports in an encrypted format so that only authorized end users can access the reports. The reporting slave server 120 may provide an encryption key generated by the master server 110 to the authorized end users to decrypt the reports for accessing the load information.

### Computer System

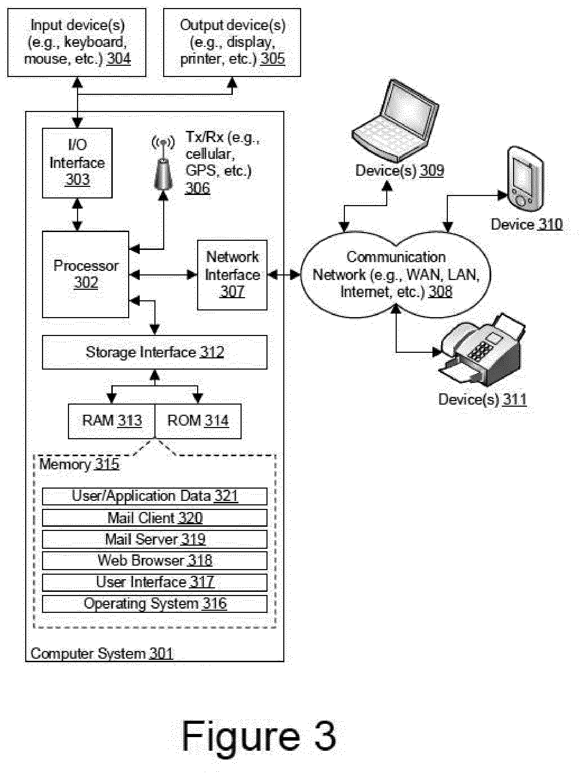

**FIG. 3** is a block diagram of an exemplary computer system for implementing embodiments consistent with the present disclosure. Variations of computer system 301 may be used for implementing the master server 110, the landing module 112, the converter module 114, the ETL/ELT slave server, the database slave server 118, and the reporting slave server 120 presented in this disclosure. Computer system 301 may comprise a central processing unit ("CPU" or "processor") 302. Processor 302 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 302 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.
Processor 302 may be disposed in communication with one or more input/output (I/O) devices via I/O interface 303. The I/O interface 303 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc. Using the I/O interface 303, the computer system 301 may communicate with one or more I/O devices. For example, the input device 304 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 305 may be a printer, fax machine, video display (e.g., cathode ray tube (CRT), liquid crystal display (LCD), light-emitting diode (LED), plasma, or the like), audio speaker, etc. In some embodiments, a transceiver 306 may be disposed in connection with the processor 302. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 302 may be disposed in communication with a communication network 308 via a network interface 307. The network interface 307 may communicate with the communication network 308. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 308 may include, without limitation, a direct interconnection, local area network (LAN), wide area network (WAN), wireless network (e.g., using Wireless Application Protocol), the Internet, etc. Using the network interface 307 and the communication network 308, the computer system 301 may communicate with devices 310, 311, and 312. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 301 may itself embody one or more of these devices.

In some embodiments, the processor 302 may be disposed in communication with one or more memory devices (e.g., RAM 313, ROM 314, etc.) via a storage interface 312. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 316, user interface application 317, web browser 318, mail server 319, mail client 320, user/application data 321 (e.g., any data variables or data records discussed in this disclosure), etc. The operating system 316 may facilitate resource management and operation of the computer system 301. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 317 may facilitate display, execution, interaction, manipulation, or operation of program components through textual or graphical facilities. For example, user interfaces may provide computer interaction interface elements on a display system operatively connected to the computer system 301, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 301 may implement a web browser 318 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 301 may implement a mail server 319 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 301 may implement a mail client 320 stored program component. The mail client may be a mail viewing application, such as Apple Mail, Microsoft Entourage, Microsoft Outlook, Mozilla Thunderbird, etc.

In some embodiments, computer system 301 may store user/application data 321, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described systems and methods for optimized implementation of a data warehouse on a cloud. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method for optimized implementation of a data warehouse on a cloud network (104), the method comprising:
receiving (202), by a cloud integrated data warehousing "CIDW" system (102), data from at least one data source (108), wherein the CIDW system comprises, an ETL/ELT slave server (116), a database slave server (118), and a reporting slave server (120);
processing (204) the data to obtain structured data;
encrypting (206) the structured data;
decrypting (208) load data, from amongst the structured data, to be loaded into a database;
loading (210) the load data into the database through one of an extract transform load "ETL" process and an extract load transform "ELT" process, wherein, to optimize transformation load share between the ETL/ELT slave server (116) and the database slave server (118), the ELT process is initiated when a transformation load is on the database slave server (118) and the ETL process is initiated when the transformation load is on the ETL/ELT slave server (116) acting as an ETL slave server;
performing data aggregation at the data base slave server (118) or at the reporting slave server (120), wherein if the ELT process is initiated, the data aggregation is performed at the reporting slave server, and
generating (212), by the reporting slave server (120), one or more reports comprising encrypted load information for end users (106-1, 106-2, 106-N).

2. The method as claimed in claim 1, further comprising providing an encryption key to authorized end users (106-1, 106-2, 106-N) to decrypt the encrypted load information in the reports.

3. The method as claimed in claim 1 or claim 2, wherein the at least one data source (108) comprises structured data sources and unstructured data sources.

4. The method as claimed in any preceding claim, wherein processing the data further comprises converting unstructured data, received from unstructured data sources, into structured data.

5. The method as claimed in any preceding claim, wherein loading the load data further comprises identifying, by a master server (110) of the CIDW system, one of the extract transform load process and the extract load transform process to be performed.

6. The method as claimed in any preceding claim, further comprising performing the extract transform load process by the ETL/ELT slave server (116) acting as the ETL slave server.

7. The method as claimed in any preceding claim, further comprising performing the extract load transform process by the database slave server (118).

8. The method as claimed in any preceding claim, further comprising performing data aggregation by the database slave server (118) upon identifying that the data aggregation is not performed by the reporting slave server (120).

9. A cloud integrated data warehousing system (102) for optimized implementation of a data warehouse on a cloud network (104), comprising:
one or more processors (302);
a computer-readable medium storing instructions that, when executed by the one or more processors, cause the one or more processors (302) to perform the method as claimed in any preceding claim.

10. A non-transitory computer-readable medium storing instructions for optimized implementation of a data warehouse on a cloud network (104), wherein upon execution of the instructions by one or more processors (302), the processors perform the method as claimed in any one of claims 1 to 8.

## Patentansprüche

1. Durch einen Prozessor implementiertes Verfahren zur optimierten Implementierung eines Data Warehouse auf einem Cloud-Netzwerk (104), wobei das Verfahren aufweist:
durch ein Cloud-integriertes Data-Warehousing-, "CIDW", System (102) ein Empfangen (202) von Daten von mindestens einer Datenquelle (108), wobei das CIDW-System einen ETL/ELT-Slave-Server (116), einen Datenbank-Slave-Server (118) und einen Reporting-Slave-Server (120) aufweist;
ein Verarbeiten (204) der Daten zum Erhalten von strukturierten Daten;
ein Verschlüsseln (206) der strukturierten Daten;
ein Entschlüsseln (208) von Ladedaten aus den strukturierten Daten, die in eine Datenbank geladen werden sollen;
ein Laden (210) der Ladedaten in die Datenbank über einen Extract-Transform-Load-(Extraktion, Transformation, Laden) "ETL", Prozess oder einen Extract-Load-Transform-, "ELT", Prozess, wobei der ELT-Prozess zum Optimieren des Transformation-Ladevorgang-Anteils zwischen dem ETL/ELT-Slave-Server (116) und dem Datenbank-Slave-Server (118) initiiert wird, wenn ein Transform-Load-Vorgang auf dem Datenbank-Slave-Server (118) vorhanden ist, und der ETL-Prozess wird initiiert, wenn der Transform-Load-Vorgang auf dem ETL/ELT-Slave-Server (116) vorhanden ist, der als ETL-Slave-Server wirkt;
ein Ausführen einer Datenaggregation an dem Datenbank-Slave-Server (118) oder an dem Reporting-Slave-Server (120), wobei, wenn der ELT-Prozess initiiert wird, die Datenaggregation an dem Reporting-Slave-Server ausgeführt wird, und durch den Reporting-Slave-Server (120) ein Generieren (212) von einem oder mehr Berichten, die verschlüsselte Ladeinformationen für Endbenutzer (106-1, 106-2, 106-N) aufweisen.

2. Verfahren nach Anspruch 1, ferner aufweisend ein Bereitstellen eines Verschlüsselungsschlüssels für autorisierte Endbenutzer (106-1, 106-2, 106-N) zum Entschlüsseln der verschlüsselten Ladeinformationen in den Berichten.

3. Verfahren nach Anspruch 1 oder Anspruch 2, wobei die mindestens eine Datenquelle (108) strukturierte Datenquellen und unstrukturierte Datenquellen aufweist.

4. Verfahren nach einem der vorhergehenden Ansprüche, wobei ein Verarbeiten der Daten ferner ein Konvertieren von unstrukturierten Daten, die von unstrukturierten Datenquellen empfangen wurden, in strukturierte Daten aufweist.

5. Verfahren nach einem der vorhergehenden Ansprüche, wobei ein Laden der Ladedaten ferner ein Identifizieren des Extract-Transform-Load-Prozesses oder des Extract-Load-Transform-Prozesses, der ausgeführt werden soll, durch einen Master-Server (110) des CIDW-Systems aufweist.

6. Verfahren nach einem der vorhergehenden Ansprüche, ferner aufweisend ein Ausführen des Extract-Transform-Load-Prozesses durch den ETL/ELT-Slave-Server (116), der als der ETL-Slave-Server wirkt.

7. Verfahren nach einem der vorhergehenden Ansprüche, ferner aufweisend ein Ausführen des Extract-Load-Transform-Prozesses durch den Datenbank-Slave-Server (118).

8. Verfahren nach einem der vorhergehenden Ansprüche, ferner aufweisend ein Ausführen einer Datenaggregation durch den Datenbank-Slave-Server (118) nach einem Identifizieren dass die Datenaggregation nicht durch den Reporting-Slave-Server (120) ausgeführt wird.

9. Cloud-integriertes Data-Warehousing-System (102) zur optimierten Implementierung eines Data Warehouse auf einem Cloud-Netzwerk (104), aufweisend:
einen oder mehrere Prozessoren (302);
ein computerlesbares Medium, das Anweisungen speichert, die, wenn sie von dem einen oder den mehreren Prozessoren ausgeführt werden, den einen oder die mehreren Prozessoren (302) veranlassen, das Verfahren nach einem der vorhergehenden Ansprüche auszuführen.

10. Nicht flüchtiges computerlesbares Medium, das Anweisungen zur optimierten Implementierung eines Data Warehouse auf einem Cloud-Netzwerk (104) speichert, wobei die Prozessoren bei Ausführung der Anweisungen durch einen oder mehrere Prozessoren (302) das Verfahren nach einem der Ansprüche 1 bis 8 ausführen.

## Revendications

1. Méthode mise en oeuvre par processeur d'application optimisée d'une banque de données dans un réseau en nuage (104), la méthode comprenant :
la réception (202), par un système d'entreposage des données intégré dans le nuage « CIDW » (102), de données provenant d'au moins une source (108), le système CIDW comprenant : un serveur esclave ETL/ELT (116), un serveur esclave de base de données (118), et un serveur esclave de rapport (120) ;
le traitement (204) des données pour obtenir des données structurées ;
le cryptage (206) des données structurées ;
le décryptage (208) des données de chargement, parmi les données structurées, devant être chargées dans une base de données ;
le chargement (210) des données de charge dans la base de données par le biais d'un des suivants : un procédé Extraction, Transformation, Chargement « ETL » et un procédé Extraction, Chargement, Transformation « ELT », dans lequel, afin d'optimiser la répartition de la charge de transformation entre le serveur esclave ETL/ELT (116) et le serveur esclave de base de données (118), le procédé ELT est lancé lorsqu'une charge de transformation se trouve sur le serveur esclave de base de données (118), et le procédé ETL est lancé lorsque la charge de transformation se trouve sur le serveur esclave ETL/ELT (116) agissant comme un serveur esclave ETL ;
l'exécution de l'agrégation de données au serveur d'esclave de base de données (118) ou au serveur esclave de rapports (120), le procédé ELT étant initié, l'agrégation de données étant effectuée au serveur esclave de rapports, et la génération (212), par le serveur esclave de rapports (120), d'un ou plusieurs rapports comprenant des informations de charge cryptées pour des utilisateurs finaux (106-1, 106- 2, 106-N).

2. Méthode selon la revendication 1, comprenant en outre une clé de chiffrement pour autoriser des utilisateurs finaux (106-1, 106- 2, 106-N) à déchiffrer les informations de charge cryptées dans les rapports.

3. Méthode selon la revendication 1 ou la revendication 2, l'au moins une source de données (108) comprenant des sources de données structurées et des sources de données non structurées.

4. Méthode selon une quelconque des revendications précédentes, le traitement des données comprenant en outre la conversion de données non structurées, reçues de sources de données non structurées, en données structurées.

5. Méthode selon une quelconque des revendications précédentes, le chargement des données de chargement comprenant en outre l'identification, par un serveur maître (110) du système CIDW, d'un du procédé extraction, transformation, chargement et du procédé extraction, chargement, transformation à effectuer.

6. Méthode selon une quelconque des revendications précédentes, comprenant en outre l'exécution du procédé extraction, transformation, chargement par le serveur esclave ETL/ELT (116) exerçant les fonctions de serveur esclave ETL.

7. Méthode selon une quelconque des revendications précédentes, comprenant en outre le procédé extraction, chargement, transformation par le serveur esclave de base de données (118).

8. Méthode selon une quelconque des revendications précédentes, comprenant en outre l'exécution de l'agrégation de données par le serveur d'esclave de base de données (118) lors de l'identification du fait que l'agrégation de données n'est pas effectuée par le serveur esclave de rapports (120).

9. Système d'entreposage des données intégré dans le nuage (102) pour l'optimisation d'une banque de données dans un réseau en nuage (104), comprenant :
un ou plusieurs processeurs (302) ;
un support lisible par ordinateur stockant des instructions, qui, lors de leur exécution par le ou plusieurs processeurs, donne lieu à l'exécution, par le ou plusieurs processeurs (302), de la méthode selon une quelconque des revendications précédentes.

10. Support non transitoire lisible par ordinateur stockant des instructions pour la mise en oeuvre optimisée d'une banque de données dans un réseau en nuage (104), dans lequel, lors de l'exécution des instructions par un ou plusieurs processeurs (302), les processeurs effectuent la méthode selon une quelconque des revendications 1 à 8.
